# DEMANDE DE BREVET EUROPEEN

(11) **EP 2 957 819 A1**
(43) Date de publication de la demande: **23.12.2015**
(21) Numéro de dépôt: 15166183.2
(22) Date de dépôt: 04.05.2015
(51) Int. Cl.: F21S 8/10

(54) **MODULE D'ÉCLAIRAGE ET/OU DE SIGNALISATION ROTATIF**

(30) Priorité: 16.06.2014 FR 1455503
(71) Demandeur: VALEO VISION, 93012 Bobigny Cedex (FR)
(72) Inventeur: De Lamberterie, Antoine, 75019 PARIS (FR); Dubosc, Christophe, 93250 VILLEMOMBLE (FR); Thabet, Ziyed, 75015 PARIS (FR); Sommerschuh, Stephan, 75013 PARIS (FR); Elhachir, Brahim, 75019 PARIS (FR); Reiss, Benoît, 95580 MARGENCY (FR)

(57) **Abrégé**

L'invention concerne un module d'éclairage et/ou de signalisation (10) notamment pour véhicule automobile, comportant un support (16) dont une première face réfléchissante (20) forme des moyens de déviation optique de rayons lumineux émis par une première source de lumière (22), ledit support comportant en outre une face opposée d'aspect (28), ledit support étant monté mobile en rotation autour d'un premier axe (14) sous l'effet d'un actionneur (12) tandis que la première source de lumière reste fixe par rapport à l'actionneur.

Un châssis (18) comporte deux écrans (28, 30) aptes à être placés respectivement en regard de la première face réfléchissante et de la face d'aspect, et chaque écran porte des moyens optiques tels que les moyens optiques portés par un premier (28) desdits deux écrans sont différents des moyens optiques portés par le deuxième (30) desdits deux écrans.

## Description

L'invention a trait au domaine de l'éclairage et/ou de la signalisation, notamment pour véhicules automobiles. Plus particulièrement, l'invention a trait à un module d'éclairage et/ou de signalisation pour véhicule automobile, ainsi qu'à un projecteur comprenant un tel module.

Le document FR 2 817 212 décrit un projecteur de véhicule automobile avec une fonction d'éclairage directionnel plus connu sous l'acronyme DBL (Dynamic Bending Light). Le projecteur comprend un système optique dont la direction d'éclairage est modifiée par rotation, un arbre de sortie couplé au système optique afin que celui-ci soit entraîné, un moteur, et un mécanisme de transmission de rotation couplé au moteur afin qu'il transmette la rotation du moteur à l'arbre de sortie, dans lequel le moteur, l'arbre de sortie et le mécanisme de transmission de rotation sont placés dans un corps de boîtier, et un arbre rotatif du moteur est supporté par le corps de boîtier. Un arbre de support d'un pignon intermédiaire placé entre le moteur et l'arbre de sortie est directement supporté par le corps de boîtier.

Le document EP 1 285 812 décrit un projecteur comportant un ensemble mobile muni d'un réflecteur et d'une source de lumière, et un ensemble fixe bordant au moins partiellement l'ensemble mobile qui peut tourner, relativement à l'ensemble fixe, autour d'un premier axe vertical pour un réglage en azimut, et autour d'un axe transversal horizontal pour un réglage en site. Une telle disposition a pour but de garder les jeux de fonctionnement constants entre les pièces fixes et les pièces mobiles.

Le document EP 2 423 047 décrit un projecteur d'un véhicule automobile conçu pour réunir la fonction d'éclairage de nuit avec la fonction de signalisation de jour connue sous l'acronyme anglais DRL (Daytime Running Light). L'éclairage de nuit est obtenu par un module d'éclairage fixe, tandis que l'éclairage de type DRL est réalisé au moyen d'un réseau de diodes électroluminescentes pouvant être escamoté dans une position interne au projecteur.

L'invention a pour objectif de proposer un module et un projecteur d'éclairage et/ou de signalisation apte à assurer au moins deux fonctions d'éclairage et/ou de signalisation et de construction simple et compacte.

Dans ce but, l'invention a pour objet un module d'éclairage et/ou de signalisation pour véhicule automobile, comportant des moyens de déviation optique de rayons lumineux émis par une première source de lumière, et dans lequel les moyens de déviation optique sont montés mobile en rotation autour d'un premier axe sous l'effet d'un actionneur tandis que la première source de lumière reste fixe par rapport à l'actionneur. Dans le module selon l'invention, on a par ailleurs un châssis qui comporte au moins deux écrans, dont au moins un joue le rôle de guide optique, chaque écran portant des moyens optiques tels que les moyens optiques portés par un premier desdits deux écrans sont différents des moyens optiques portés par le second desdits deux écrans.

Dans un tel module, on comprend que les moyens de déviation optique et la première source de lumière coopèrent pour remplir une fonction d'éclairage et/ou de signalisation réglementaire. On prévoira que le châssis comporte une base qui s'étend transversalement à l'axe de rotation des moyens de déviation optique pour relier et porter les deux écrans.

En outre l'invention possède les caractéristiques suivantes, considérées isolément ou en combinaison :
- chacun des écrans présente un bord supérieur formant la face d'entrée de la lumière et un bord périphérique formant la ou les faces de sortie de la lumière, et qui porte à cet effet des moyens de découplage, notamment sous forme de prismes ;
- le bord périphérique des écrans peut présenter un prisme orienté de telle ou telle façon pour procéder au renvoi de la lumière vers l'avant du véhicule pour remplir une fonction de signalisation et/ou vers l'arrière pour participer à la fonction d'aspect ;
- au moins un desdits écrans comporte une nappe centrale apte à guider la lumière depuis le bord supérieur formant la face d'entrée ; la nappe centrale de l'un des deux écrans peut alors porter des moyens de découplage, notamment des prismes dont l'agencement forme un ou plusieurs motifs sensiblement au centre dudit écran ; dans ce contexte , on pourra prévoir que l'un des deux écrans soit muni en son centre d'un motif formé de moyens de découplage, tandis que l'autre écran présente une surface neutre, apte à être disposée sur le trajet de rayons lumineux sans les dévier, ou tout du moins en ne les déviant que très légèrement ;
- un desdits écrans du châssis comporte des éléments de découplage de la lumière sur tout ou partie de sa surface pour la fonction d'aspect, tandis que l'autre écran présente un revêtement neutre.

Selon une autre série de caractéristiques qui peuvent être prises isolément ou en combinaison, et qui peuvent être combinées avec les caractéristiques relevées précédemment :
- le châssis est monté mobile en rotation autour d'un deuxième axe sous l'effet d'un deuxième actionneur, de manière à ce que des moyens de commande associés puissent commander à l'un ou l'autre desdits écrans du châssis de prendre une position active sur le trajet des rayons lumineux déviés par lesdits moyens de déviation optique ;
- le châssis est agencé de sorte que les écrans sont aptes à tourner autour dudit deuxième axe pour prendre ladite position active dans laquelle ils sont en regard d'une deuxième source de lumière distincte de la première source de lumière ;
- les deux axes de rotation sont sensiblement coaxiaux.

D'autres caractéristiques peuvent être notées parmi lesquelles le fait qu'on pourra prévoir que la première source de lumière est disposée sensiblement sur le premier axe, et/ou que les moyens de déviation optiques consistent en un réflecteur formé sur une face d'un support solidaire du premier axe.

Par ailleurs, selon deux variantes de réalisation, on pourra prévoir que le châssis est solidaire en rotation des moyens de déviation optique, ou bien qu'il est entraîné en rotation indépendamment des moyens de déviation optique.

Selon des caractéristiques complémentaires de l'invention, le module pourra comporter une troisième source de lumière, fixe par rapport à la première source de lumière, qui est disposée de sorte que lorsque le premier écran, respectivement le deuxième écran, est en regard de la deuxième source de lumière, le deuxième écran, respectivement le premier écran, est en regard de ladite troisième source de lumière. La deuxième source de lumière et la troisième source de lumière sont fixes par rapport à la première source de lumière.

L'invention a aussi pour objet un projecteur d'éclairage et/ou de signalisation pour un véhicule automobile, comprenant un boîtier et au moins un module d'éclairage et/ou de signalisation possédant les caractéristiques énoncées plus haut. On pourra prévoir que le projecteur comporte trois modules disposés en série dans le boîtier.

D'autres caractéristiques et avantages de la présente invention apparaitront plus clairement à l'aide de la description et des dessins parmi lesquels :
- la figure 1 est une vue en perspective de trois quart avant d'un module d'éclairage et/ou de signalisation selon un premier mode de réalisation de l'invention, représenté ici dans une première position avec une face d'un support formant réflecteur qui est tournée vers l'avant et avec un premier écran d'un châssis qui est en regard de ce réflecteur ;
- la figure 2 est une vue, similaire à celle de la figure 1, du module représenté dans une deuxième position avec une deuxième face du support, opposée à la face formant réflecteur, qui est tournée vers l'avant, et un deuxième écran du châssis qui est en regard de cette deuxième face ;
- la figure 3 est une vue, similaire à celles des figures 1 et 2, du module représenté dans une troisième position avec la deuxième face du support qui est tournée vers l'avant, et avec cette fois le premier écran qui est en regard de cette deuxième face ;
- les figures 4 à 7 qui sont des vues en coupe, dans un plan longitudinal et vertical, du module de la figure 1, dans différentes positions du support et du châssis ; et
- la figure 8 est une vue semblable à celle de la figure 2 illustrant un module selon un deuxième mode de réalisation, dans lequel le deuxième écran ici en regard de la deuxième face du support comporte des surfaces optiques formant un motif pour la réalisation de la fonction de signalisation.

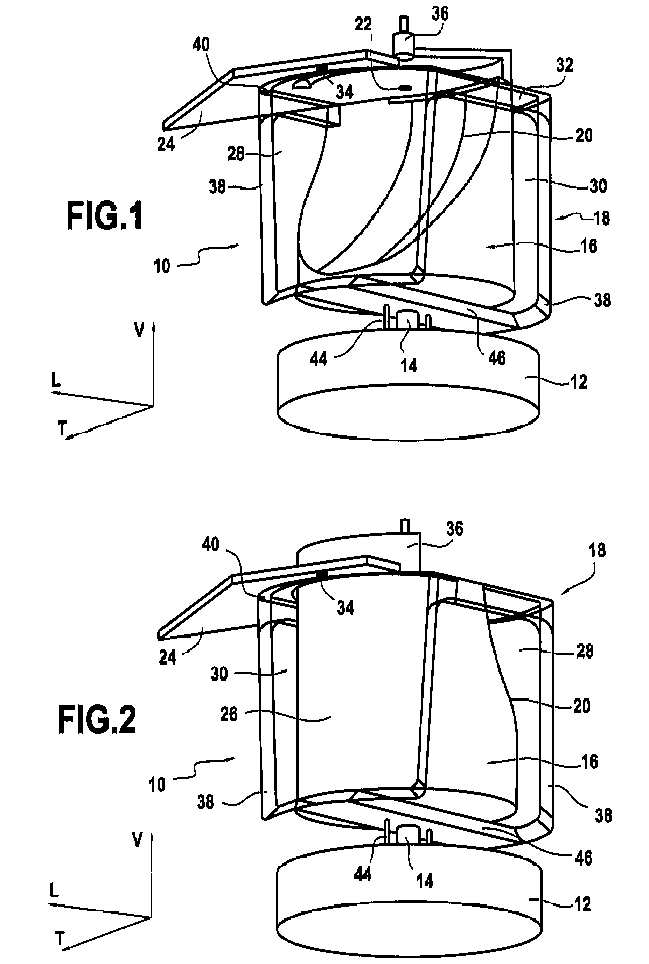

Dans la description qui va suivre, on adoptera à titre non limitatif une orientation longitudinale, verticale et transversale selon l'orientation traditionnellement utilisée dans l'automobile et indiquée par le trièdre L, V, T reporté sur la figure 1.

Les figures illustrent différents modes de réalisation d'un module d'éclairage et/ou de signalisation 10 selon l'invention. Dans ces différents cas, chaque module est fixé dans un boitier (non représenté) d'un projecteur, et il comporte un premier actionneur 12 solidaire du boitier, un premier axe 14 entrainé en rotation par le premier actionneur 12 et solidaire d'un support 16, ainsi qu'un châssis 18.

Le premier actionneur 12 comprend un moteur électrique, piloté par des moyens de commande ici non représentés et aptes à transmettre une instruction de commande audit moteur, et des moyens de transmission en rotation entre le moteur et le premier axe. Dans les modes de réalisation représentés, le premier axe 14 soutient le support 16 en sa partie inférieure, et le premier axe 14 est sensiblement vertical, mais il pourrait avoir une autre orientation.

Le support 16 du module 10 comprend une première face réfléchissante 20 jouant le rôle d'un réflecteur apte à assurer une fonction d'éclairage et/ou de signalisation réglementaire. Cette fonction est remplie par la coopération du réflecteur 20 avec une première source de lumière 22. La première source de lumière 22 est fixe par rapport à l'actionneur.

On entend par « réglementaire » le fait qu'une fonction d'éclairage et/ou de signalisation est conforme à la réglementation en vigueur. Cette fonction d'éclairage et/ou de signalisation réglementaire peut être une fonction de signalisation de jour, communément désigné par l'appellation DRL (de l'acronyme anglo-saxon « Daytime Running Light »), ou bien une fonction d'éclairage de croisement, communément désignée « code », ou encore une fonction d'éclairage communément désignée « route ». Cette fonction d'éclairage réglementaire peut consister en un faisceau de route non éblouissant. La première face réfléchissante 20 assure ainsi la formation d'un faisceau d'éclairage et/ou de signalisation réglementaire dirigé vers l'avant du véhicule.

La première source de lumière 22 est une source à semi-conducteurs, et de préférence du type diode à électroluminescence (LED), et elle est sensiblement alignée sur le premier axe 14. On entend par l'expression « sensiblement alignée » que la distance entre le centre géométrique de la diode électroluminescente 22 et l'axe de rotation du support 16 n'est pas supérieure aux dimensions de la diode électroluminescente 22. Cette dernière peut être fixée et positionnée sur une carte de circuits imprimés 24, lui-même fixée dans le boitier (non représenté) du projecteur.

Le support 16 du module 10 comporte également une deuxième face 26 opposée à la première face formant le réflecteur 20 et assurant une deuxième fonction. Cette deuxième fonction peut être soit une fonction de signalisation de jour réglementaire, soit une fonction d'éclairage de croisement et/ou de route réglementaire, soit une fonction d'aspect.

Le châssis 18 comporte deux écrans 28 et 30 dont au moins un joue le rôle d'un guide optique, ces deux écrans s'étendant sensiblement verticalement dans le module et étant reliés à leur extrémité supérieure par des parois de liaison transversales 32. Le châssis est agencé dans le module de sorte que le premier écran 28 ou le deuxième écran 30 soit apte à prendre une position active sur le trajet des rayons lumineux lorsque les moyens de déviation optique réfléchissent des rayons lumineux émis par la première source de lumière vers la sortie du module. Par ailleurs, le premier écran ou le deuxième écran du châssis 18 se retrouvant dans cette position active est disposé au droit d'au moins une deuxième source de lumière 34 assurant ainsi une fonction de signalisation réglementaire. La deuxième source de lumière 34 est avantageusement fixée et positionnée sur la carte de circuits imprimés 24, porteur par ailleurs de la première source de lumière 22. On comprendra toutefois que si cette solution présente des avantages d'encombrement notamment, on pourra prévoir que la deuxième source de lumière soit fixée et positionnée sur une carte de circuits imprimés distincte de celle associée à la première source de lumière. Dans tous les cas, la deuxième source de lumière 34 est fixe par rapport à la première source de lumière 22. Elle peut être constituée d'une ou plusieurs diodes électroluminescentes (LED).

Tel qu'illustré, le module 10 peut comporter un pivot supérieur 36 colinéaire avec le premier axe 14 par l'intermédiaire du support 16 pour accroître la précision du positionnement relatif de la première source de lumière 22 par rapport au réflecteur 20, ainsi que la précision du positionnement relatif de la deuxième source de lumière 34 par rapport aux écrans 28 et 30 du châssis 18.

On va maintenant décrire plus en détails, en se référant notamment aux différents modes de réalisation illustrés sur les figures, la caractéristique de l'invention selon laquelle les deux écrans du châssis sont distincts, notamment en ce qu'ils présentent des surfaces optiques différentes.

Chacun des écrans présente un bord périphérique 38 et un bord supérieur 40 disposé directement sous la seconde source de lumière. Ces écrans prennent de préférence la forme d'un guide de lumière en nappe, dont la face d'entrée est formée par le bord supérieur de l'écran et dont les faces de sortie sont aménagées dans le bord périphérique. Par guide en nappe, on entend un guide surfacique, porteur de deux dioptres qui s'étendent sensiblement parallèles l'un par rapport à l'autre. La partie périphérique de l'un ou l'autre des écrans peut présenter un prisme orienté de telle ou telle façon pour procéder au renvoi de la lumière de la deuxième source 34 vers l'avant du véhicule pour remplir une fonction de signalisation et/ou vers l'arrière pour participer à la fonction d'aspect.

La fonction d'aspect de la deuxième face 26 du support 16 peut ainsi être accompagnée de la fonction de signalisation fournie par le châssis 18.

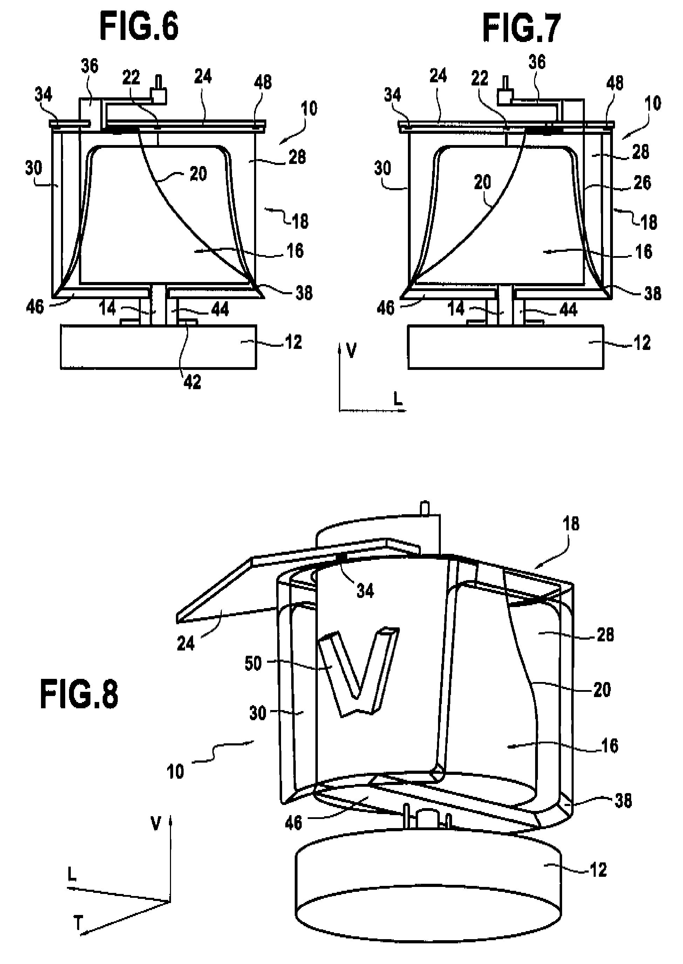

On peut prévoir que l'un des deux écrans soit muni en son centre d'un marquage formé de prismes qui permette son illumination pour venir en complément de la fonction d'aspect de la deuxième face 26 du support 16, tandis que l'autre écran présente une surface neutre, apte à ne pas gêner la diffusion des rayons lumineux émis par la première source 24 et déviés par le réflecteur. Il convient de noter alors que chaque écran est spécifiquement dédié à l'une des faces des moyens de déviation optique. Dans ce mode de réalisation, illustré sur la figure 6, le châssis 18 peut être solidaire en rotation du support 16, de sorte que seul un premier axe de rotation et un premier actionneur sont prévus.

D'autres différences structurelles peuvent apparaître, comme par exemple le fait que l'un des écrans du châssis soit, sur tout ou partie de sa surface, porteur d'éléments de découplage de la lumière, agencés ou non pour former des motifs par exemple, pour la fonction d'aspect, tandis que l'autre écran ne présente pas un tel aspect pour rester neutre.

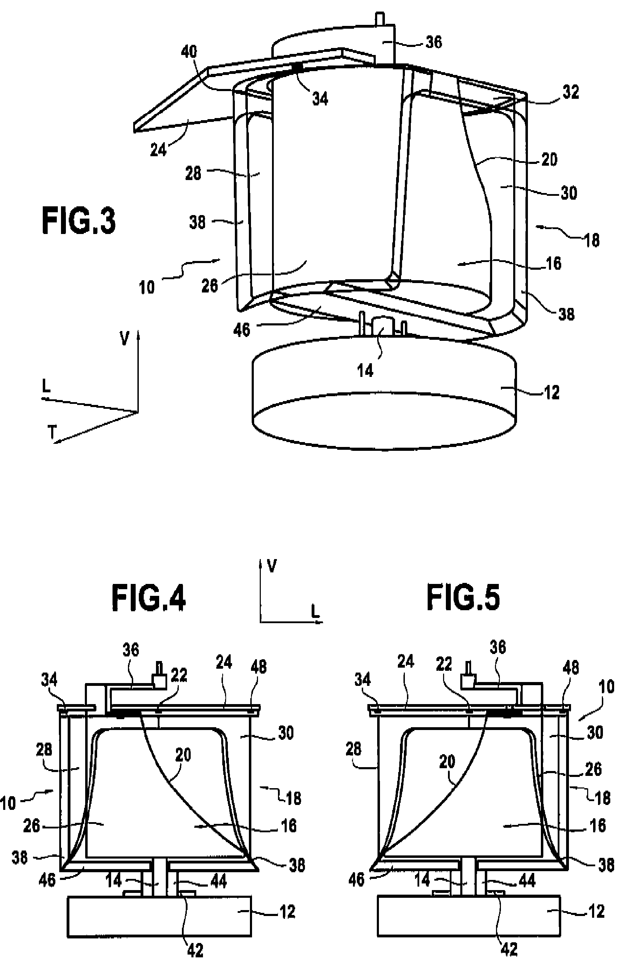

La caractéristique de la présente invention selon laquelle les écrans du châssis présentent des surfaces optiques différentes d'un écran à l'autre est d'autant plus intéressante si les écrans font partie d'un châssis monté mobile en rotation indépendamment de la rotation du support du réflecteur autour du premier axe, tel que cela est illustré sur les figures 1 à 7. Ainsi, on peut obtenir pour chaque module quatre combinaisons différentes, illustrées sur les figures 4 à 7, selon que ce soit la première ou la deuxième face du support qui soit tournée vers l'avant du véhicule et que ce soit simultanément le premier ou le deuxième écran qui soit disposé en amont du support. On entend par « en amont » la position active dans laquelle l'écran est disposé entre le réflecteur et l'avant du véhicule.

A cet effet, le module comporte un deuxième actionneur 42 solidaire du boîtier, piloté comme le premier actionneur par des moyens de commande ici non représentés, et un deuxième axe 44, parallèle et avantageusement sensiblement coaxial, est entraîné en rotation par le deuxième actionneur et solidaire du châssis 18, au niveau d'une base 46 qui relie transversalement les extrémités inférieures de chacun des écrans.

Le deuxième actionneur 42 comporte, de façon équivalente au premier actionneur 12, un moteur électrique et des moyens de transmission en rotation entre le moteur et le deuxième axe 44. Un agencement possible des deux actionneurs et des deux axes est illustré sur les figures, étant entendu que d'autres types d'agencement pourront être choisis par l'homme du métier. Dans les modes de réalisation représentés, la base 46 relie les deux extrémités inférieures des écrans 28 et 30, la base s'étendant en travers du premier axe de rotation du support.

Par ailleurs, le fait d'avoir deux écrans qui présentent chacun un bord supérieur formant face d'entrée et un bord périphérique formant face de sortie de la lumière peut avantageusement être combiné à la présence, outre la deuxième source de lumière telle qu'elle a été décrite ci-dessus, d'une troisième source de lumière 48 disposée de manière fixe par rapport à la première source de lumière, de sorte que lorsque le premier écran 28 du châssis 18 est disposé au droit de la deuxième source de lumière 34, le deuxième écran 30 est disposé au droit de la troisième source de lumière 48, et inversement, de manière à réaliser là aussi une fonction de signalisation réglementaire. La troisième source de lumière 48 est avantageusement fixée et positionnée sur la carte de circuits imprimés 24, porteur par ailleurs des première et deuxième sources lumineuses. On comprendra toutefois que si cette solution présente des avantages d'encombrement notamment, on pourra prévoir que la troisième source de lumière soit fixée et positionnée sur une carte de circuits imprimés indépendante. Dans tous les cas, la troisième source de lumière 48 est fixe par rapport à la première source de lumière 22. Elle peut être constituée d'une ou plusieurs diodes électroluminescentes (LED).

On va maintenant décrire le fonctionnement d'un module selon l'invention, en s'appuyant sur les positions du module représentées sur les figures 1 à 3. Le châssis comporte deux écrans 28 et 30 de même que le support a deux faces 20 et 26, chacun des écrans du châssis 18 coopérant successivement avec la deuxième source de lumière 34 et avec, si elle est présente dans le module, la troisième source de lumière 48.

On comprend que, bien que de telles positions ne soient pas illustrées sur les figures, les écrans jouant le rôle de guide optique peuvent être placés dans une position, notamment par une rotation de 90°, dans laquelle ils ne se retrouvent pas sur le trajet des rayons réfléchis par les moyens de déviation optique.

Sur la figure 1, le module 10 est orienté de manière à ce que le réflecteur 20 soit visible et orienté vers l'avant du véhicule. Le module 10 assure en conséquence dans cette configuration la fonction d'éclairage et/ou de signalisation réglementaire décrite ci-avant. Lorsque la première source de lumière 22 est allumée, elle émet des rayons lumineux en direction du réflecteur. Le réflecteur renvoie les rayons lumineux vers l'avant du véhicule pour remplir la fonction d'éclairage et/ou de signalisation réglementaire. Sur leur trajectoire, un premier écran 28 du châssis est disposé en amont du réflecteur, sur le trajet des rayons lumineux réfléchis par le réflecteur 20 après émission par la première source de lumière, et les rayons lumineux traversent la face transparente du premier écran.

La fonction d'éclairage peut également être directionnelle, c'est-à-dire du type DBL (Dynamic Bending Light), grâce à l'actionneur 12 du module 10, qui peut commander une rotation du réflecteur de quelques degrés autour du premier axe. Cette rotation s'accompagne d'un déplacement combiné de l'écran qui reste en regard du réflecteur lorsque le châssis est solidaire en rotation du réflecteur, et lorsque le châssis est monté mobile en rotation de façon indépendante de la rotation du réflecteur, on commande la rotation de l'écran pour que là encore l'écran reste dans l'axe d'émission des rayons réfléchis par le réflecteur, pour qu'aucune dispersion des rayons ne résulte de cet éclairage directionnel.

La deuxième source de lumière 34 peut être allumée en plus de la première source de lumière 22 afin que la partie périphérique 38 du premier écran 28, en regard du réflecteur, émette de la lumière. Cela permet d'utiliser un premier écran du châssis 18 en complément du réflecteur 20, et réaliser une fonction de signalisation en complément de la fonction d'éclairage. Par exemple, on pourra créer un portique de lumière par l'illumination de la partie périphérique 38 du premier écran, venant en encadrement de la zone d'éclairage réglementaire définie par le réflecteur. On pourra également commander l'allumage de la troisième source de lumière 48, en plus de la première source de lumière 22, indépendamment du fait que la deuxième source de lumière 34 ait été allumée ou non. Cela permet d'utiliser, via l'émission de lumière de la partie périphérique du deuxième écran 30 en regard de la deuxième face 26 du support, d'utiliser ce deuxième écran du châssis pour réaliser une fonction de signalisation réglementaire. Une diode RGB pourra également être utilisée pour réaliser une fonction d'aspect, simultanément à la fonction d'éclairage réalisée par la première source de lumière et le réflecteur, et simultanément à la fonction de signalisation réalisée par la deuxième source de lumière et la partie périphérique du premier écran.

En revanche lorsque la fonction d'éclairage et/ou de signalisation assurée par le réflecteur 20 n'est pas utilisée, le module adopte automatiquement ou sur commande la configuration représentée sur les figures 2 et 3. Sur la figure 2, le support 16 du module 10 a subi par rapport à la configuration de la figure 1 une rotation de 180°, de manière à présenter la deuxième face 26 assurant ainsi la fonction d'aspect et/ou d'éclairage et/ou de signalisation décrite également ci-avant. Le module 10 passe de la configuration illustrée sur la figure 1 à la configuration illustrée sur les figures 2 et 3, et réciproquement, par un mouvement de rotation du support 16, accompagné ou non du châssis 18. Le mouvement du support est généré par l'actionneur 12 par l'intermédiaire du premier axe 14 et du pivot 36.

La face d'aspect 26 est alors visible à travers l'un des écrans du châssis. Dans le cas représenté sur la figure 2, le châssis a subi par rapport à la configuration de la figure 1 une rotation semblable à celle du support 16, c'est-à-dire une rotation de 180°, de sorte que le deuxième écran 30 reste en regard de la face d'aspect 26. Dans le cas représenté sur la figure 3, le châssis 18 est resté dans la position qu'il avait avant la rotation du support 16, de sorte que c'est le premier écran 28 qui est en regard de la face d'aspect.

On peut ainsi choisir quel écran du châssis est en amont du réflecteur, selon la fonction d'éclairage et/ou de signalisation qu'on souhaite effectuer avec le réflecteur ou la face d'aspect du support. Les différentes combinaisons possibles sont illustrées sur les figures 4 à 7. Dans une utilisation préférée de l'invention, on pilote le premier actionneur 12 pour que la rotation du support 16 amène le réflecteur 20 sous la première source de lumière 22, pour l'émission des rayons lumineux vers l'avant du véhicule, et on pilote le deuxième actionneur 42 pour que la rotation de la base 46 du châssis amène le premier écran 28 du châssis, qui présente une nappe centrale neutre, en regard du réflecteur (dans la position visible sur la figure 6).

Avantageusement, lorsque le réflecteur est tourné vers l'avant du véhicule, on joue sur la rotation du châssis pour disposer devant le réflecteur alternativement le premier écran, neutre, (dans la position visible sur la figure 6) ou le deuxième écran porteur de motifs 50 (visible sur la figure 4). On pourra ainsi prévoir de faire tourner le châssis autour du support qui reste fixe et d'allumer la deuxième source de lumière lorsque c'est l'écran porteur de motifs 50 en son centre qui est en regard de cette source pour réaliser un scénario d'accueil du conducteur avant son entrée dans le véhicule.

Il convient de noter que les faisceaux générés par le ou les modules qui ont été décrits plus haut peuvent constituer des faisceaux complémentaires à des faisceaux réglementaires générés par des dispositifs conventionnels, ou bien qu'ils peuvent constituer ensemble des faisceaux réglementaires d'éclairage et/ou de signalisation.

Un mode de réalisation particulier est illustré sur la figure 8, dans lequel le châssis est solidaire en rotation du support, de sorte qu'il ne comporte pas de base reliant les extrémités inférieures des écrans et qu'il n'est pas prévu de deuxième actionneur propre à la mise en rotation du châssis. Le deuxième écran 30 présente des dispositifs optiques sur la nappe centrale, dont l'agencement forme des motifs représentant par exemple la marque du constructeur du véhicule ou des projecteurs. Le deuxième écran 30 du châssis est dans ce mode de réalisation constamment en regard de la face d'aspect du support, tandis que c'est le premier écran 28, neutre, qui est en regard du réflecteur. Lorsque le support est tourné pour que ce soit le réflecteur qui soit en position active, le premier écran neutre n'a que peu d'impact sur le trajet des rayons lumineux émis tandis que la partie périphérique 38 du premier écran peut être illuminé pour réaliser une fonction de signalisation complémentaire. Par contre, lorsque le support est tourné pour que ce soit la face d'aspect qui soit en position active, le châssis tourne de façon solidaire et le deuxième écran reste en regard de la face d'aspect, de sorte que c'est lui qui est visible, et que l'allumage de la deuxième source de lumière réalise l'éclairage du motif 50.

La description qui précède explique clairement comment l'invention permet d'atteindre les objectifs qu'elle s'est fixés et notamment de proposer un module d'éclairage et/ou de signalisation dans lequel un châssis vient en complément d'un support rotatif d'un réflecteur apte à dévier les rayons lumineux émis par une source de lumière, pour apporter une complémentarité à la fonction de signalisation notamment. La caractéristique selon laquelle le châssis comporte deux écrans aptes à se trouver chacun dans une position active en regard d'un réflecteur ou d'une face d'aspect de ce support permet de proposer de multiples combinaisons dans la fonction de signalisation du véhicule sans pour autant pénaliser la fonction d'éclairage réglementaire.

Ces avantages sont également obtenus dans des variantes non représentés, parmi lesquelles, à titre d'exemple non exhaustif, l'écran formant guide optique peut ne pas comporter de nappe centrale et être limité à un guide longitudinal disposé au voisinage du bord du réflecteur. Dans ce cas, pour la réalisation de la deuxième et de la troisième source de lumière, il pourra être prévu d'utiliser deux diodes électroluminescentes respectivement disposées à chaque extrémité du guide longitudinal.

On comprend que le projecteur d'un véhicule automobile, pour réaliser des fonctions d'éclairage et/ou de signalisation, peut comporter un ou plusieurs modules identiques à celui qui a été décrit, disposés en série dans un boîtier. Dans le cas d'une série de plusieurs modules, avantageusement trois, on pourra prévoir de rendre rotatif le support de chaque module et le châssis de chaque module par des actionneurs pouvant être pilotés de façon indépendante les uns des autres, pour assurer une plus grande souplesse dans les fonctions d'éclairage et/ou de signalisation.

## Revendications

1. Module d'éclairage et/ou de signalisation (10) notamment pour véhicule automobile, comportant un support (16) dont une première face réfléchissante (20) forme des moyens de déviation optique de rayons lumineux émis par une première source de lumière (22), ledit support comportant en outre une face opposée d'aspect (28), ledit support étant monté mobile en rotation autour d'un premier axe (14) sous l'effet d'un actionneur (12) tandis que la première source de lumière reste fixe par rapport à l'actionneur,
**caractérisé en ce qu'**il comporte en outre un châssis (18) comportant deux écrans (28, 30), dont au moins un joue le rôle d'un guide optique, aptes à être placés respectivement en regard de la première face réfléchissante et de la face d'aspect, chaque écran portant des moyens optiques tels que les moyens optiques portés par un premier (28) desdits deux écrans sont différents des moyens optiques portés par le deuxième (30) desdits deux écrans.

2. Module selon la revendication 1, **caractérisé en ce que** chacun des écrans (28, 30) présente un bord supérieur (40) formant la face d'entrée de la lumière et un bord périphérique (38) formant la ou les faces de sortie de la lumière, et qui porte à cet effet des moyens de découplage, notamment sous forme de prismes.

3. Module selon la revendication 2, **caractérisé en ce que** le bord périphérique (38) des écrans (28, 30) peut présenter un prisme orienté de telle ou telle façon pour procéder au renvoi de la lumière vers l'avant du véhicule pour remplir une fonction de signalisation et/ou vers l'arrière pour participer à la fonction d'aspect.

4. Module selon l'une des revendications 2 ou 3, **caractérisé en ce qu'**au moins un desdits écrans (28, 30) comporte une nappe centrale apte à guider la lumière depuis le bord supérieur (40) formant la face d'entrée.

5. Module selon la revendication 4, **caractérisé en ce que** la nappe centrale de l'un des deux écrans (28, 30) porte des moyens de découplage, notamment des prismes, dont l'agencement forme un ou plusieurs motifs (50) sensiblement au centre dudit écran.

6. Module selon la revendication 5, **caractérisé en ce que** l'un des deux écrans (30) est muni en son centre d'un motif formé de moyens de découplage (50), tandis que l'autre écran (28) présente une surface neutre, apte à être disposée sur le trajet de rayons lumineux sans les dévier.

7. Module selon l'une des revendications précédentes, **caractérisé en ce qu'**un desdits écrans du châssis comporte des éléments de découplage de la lumière sur tout ou partie de sa surface pour la fonction d'aspect, tandis que l'autre écran présente un revêtement neutre.

8. Module selon l'une des revendications précédentes, **caractérisé en ce que** ledit châssis (18) est monté mobile en rotation autour d'un deuxième axe (44) sous l'effet d'un deuxième actionneur (42), de manière à ce que des moyens de commande associés puissent commander à l'un ou l'autre desdits écrans du châssis de prendre une position active sur le trajet des rayons lumineux déviés par ladite première face réfléchissante (20) du support (16).

9. Module selon la revendication 8, **caractérisé en ce que** le châssis (18) est agencé de sorte que les écrans (28, 30) sont aptes à tourner autour dudit deuxième axe (44) pour prendre ladite position active dans laquelle ils sont aptes à être illuminés par une deuxième source de lumière (34) distincte de la première source de lumière (22).

10. Module selon la revendication précédente, **caractérisé en ce que** les deux axes de rotation (14, 44) sont sensiblement coaxiaux.

11. Module selon l'une quelconque des revendications précédentes, **caractérisé en ce que** la première source de lumière (22) est disposée sensiblement sur le premier axe (14).

12. Module selon l'une quelconque des revendications précédentes, **caractérisé en ce que** le châssis (18) est solidaire en rotation du support (16).

13. Module selon l'une quelconque des revendications 1 à 11, **caractérisé en ce que** le châssis (18) est entraîné en rotation indépendamment du support (16).

14. Module selon l'une quelconque des revendications précédentes, **caractérisé en ce qu'**il comporte une troisième source de lumière (48) qui est disposée de sorte que lorsque le premier écran (28), respectivement le deuxième écran (30), est en regard de la deuxième source de lumière (34), le deuxième écran (30), respectivement le premier écran (28), est en regard de ladite troisième source de lumière (48).

15. Module selon l'une quelconque des revendications précédentes, **caractérisé en ce que** la deuxième source de lumière (34) et la troisième source de lumière (48) sont fixes par rapport à la première source de lumière (22).

16. Module selon l'une quelconque des revendications précédentes, **caractérisé en ce que** lesdites sources de lumière sont respectivement constituées par au moins une source à semi-conducteurs.

17. Projecteur d'éclairage et/ou de signalisation pour véhicule automobile, comprenant un boîtier et au moins un module (10) d'éclairage et/ou de signalisation, **caractérisé en ce que** le module d'éclairage et/ou de signalisation est conforme à l'une des revendications 1 à 16.

18. Projecteur selon la revendication 17, **caractérisé en ce qu'**il comporte au moins deux modules (10) d'éclairage et/ou de signalisation disposés en série dans le boîtier.
